# EUROPEAN PATENT APPLICATION

(11) **EP 3 644 253 A1**
(43) Date of publication of application: **29.04.2020**
(21) Application number: 19204759.5
(22) Date of filing: 23.10.2019
(51) Int. Cl.: G06Q 20/28, G06Q 20/38

(54) **ANONYMISATION OF IDENTIFIER**

(30) Priority: 26.10.2018 IT 201800009828
(71) Applicant: Euronet Pay & Transaction Services Srl, 20136 Milano (IT)
(72) Inventor: LICCIARDELLO, Sebastiano, 20010 Cornaredo (IT); MARIANI, Virgilio, 20133 Milano (IT)
(74) Representative: Williams, David John

(57) **Abstract**

There is disclosed a technique comprising: in a first step: transmitting a unique identifier from a client device to a service provider; at the service provider, allocating a unique token to the unique identifier; and receiving the unique token at the client device, in a second step: providing the unique token at a point-of-sale device, transmitting the unique token to the service provider, at the service provider retrieving the unique identifier from the unique token; and applying an attribute to the unique identifier.

## Description

### BACKGROUND TO THE INVENTION:

### Field of the Invention:

The invention is concerned with the anonymisation of a unique identifier to generate a unique anonymised identifier, which unique anonymised identifier can be used to retrieve the original unique identifier. An example of use is for the application of credit to a prepaid mobile phone number.

### Description of the Related Art:

It is known in the art for credit to be used for applying to prepaid mobile telephone numbers.

One known technique involves a user going to a point-of-sale, and providing an operator at the point-of-sale with their prepaid mobile phone number and purchasing a credit amount, in order to have that purchased credit amount applied to the prepaid mobile phone number. The point-of-sale operator enters this information at a point-of-sale device, in order for a message to be sent to a mobile phone operator, in most of the cases through a third party terminal/server, associated with the prepaid mobile phone. The message is a request for the purchased credit amount to be applied to the account associated with the prepaid mobile phone number.

A disadvantage with this is that the user has to provide the point-of-sale operator with the prepaid mobile phone number. This is disadvantageous, because the number is then disclosed to the operator, and is also disclosed to anyone who is in the vicinity of the transaction, point-of-sales being located in public places.

It is an aim of the invention to address this problem.

### SUMMARY OF THE INVENTION:

There is disclosed a method comprising: in a first step: transmitting a unique identifier from a client device to a service provider; at the service provider, allocating a unique token to the unique identifier; and receiving the unique token at the client device, in a second step: providing the unique token at a point-of-sale device, transmitting the unique token to the service provider, at the service provider retrieving the unique identifier from the unique token; and applying an attribute to the unique identifier.

The unique identifier may be a prepaid mobile phone number and the attribute may be a credit amount to be applied to the prepaid mobile phone number.

In the first step the step of transmitting the unique identifier from the client device to the service provider may further comprise transmitting the attribute, wherein on allocating the unique token the unique identifier and the associated attribute are stored, wherein in the second step the step of retrieving the unique identifier may further comprise retrieving the attribute.

In the second step the step of providing the unique token at the point-of-sale device may further comprise providing the attribute, wherein the step of transmitting the unique token to the service provider may further comprise transmitting the attribute to the service provider.

The unique token may be translated to a barcode, and the step of providing the unique token may comprise scanning the barcode.

The method may further comprise receiving at the point-of-sale device an acknowledgment that the attribute has been applied to the unique identifier.

There is disclosed a server for facilitating the application of an attribute to a unique identifier, the server comprising: an interface for receiving the unique identifier from a user; a processor for associating the unique identifier to a token identifier; an interface for transmitting the associated token identifier to the user; an interface for receiving the token identifier from a service entity; wherein the processor is further configured to retrieve the unique identifier based on the token identifier.

The interface may be configured to receive an attribute in addition to the unique identifier from the user, and associate the token identifier to the unique identifier and the attribute, wherein the attribute is retrieved based on the token identifier as well as to the unique identifier, and the attribute is applied to the unique identifier.

The interface may be configured to receive an attribute from the service entity in addition to the token identifier, and associate the token identifier to the unique identifier and the attribute, and the attribute is applied to the retried unique identifier.

There is disclosed a system for the application of an attribute to a unique identifier, the system comprising: a client device, configured to transmit the unique identifier; a service provider server configured to allocate a unique token to the unique identifier, and transmit the unique token to the client device; a point-of-sale device for receiving the unique token, and for transmitting the unique service token to the service provider server, wherein the service provider server is configured to retrieve the unique identifier associated with the unique token, such that an attribute is applied to the unique identifier.

There is a provided a process comprising: providing a first unique identifier; associating an anonymised unique identifier with the first unique identifier; providing the anonymised unique identifier; and retrieving the first unique identifier associated with the anonymised unique identifier.

Preferably in providing the anonymised unique identifier, an attribute is also provided. When the first unique identifier associated with the anonymised unique identifier is retrieved, the attribute is then applied to the first unique identifier.

The attribute may be a value. The value may be a monetary value.

The first unique identifier may be a prepaid mobile phone number. The value may be a credit amount to apply to the prepaid mobile phone number.

The method may comprises a first step including the steps of providing a first unique identifier and associating an anonymised unique identifier with the first unique identifier.

The first step may be performed by a user accessing a service associated with the provision of a service associated with the application of an attribute. The service may be accessed via a web portal.

The method may comprises a second step including providing the anonymised unique identifier and retrieving the first unique identifier associated with the anonymised unique identifier

The second step may be performed by a user accessing a service associated with the provision of a service associated with the application of an attribute at a point-of-sale location.

There is provided a technique in which a unique identifier may be anonymised to generate an anonymised unique identifier. This anonymised unique identifier is then used, to recover the original unique identifier.

There is provided a method comprising, in a first step: providing a prepaid mobile phone number; and receiving a barcode, and in a second step: providing the barcode at a point-of-sale, transmitting the barcode to a server, at the server allocating the credit amount to the prepaid mobile number, and receiving an acknowledgment that the allocation has been successful.

### BRIEF DESCRIPTION OF THE FIGURES:

The invention is described by way of reference to the accompanying figures, in which:
FIG. 1 illustrates an exemplary implementation associated with obtaining an anonymised identifier for a prepaid mobile telephone number;
FIG. 2 illustrates an exemplary process flow associated with the exemplary implementation of FIG. 1;
FIG. 3 illustrates an exemplary implementation associated with using the anonymised identifier for allocating a credit to a prepaid mobile telephone number;
FIG. 4 illustrates an exemplary process flow associated with the exemplary implementation of FIG. 1; and
FIG.5 illustrates an exemplary implementation of a server for supporting the process of FIG. 2 or FIG 4.

### DESCRIPTION OF PREFERRED EMBODIMENTS:

An example is described with respect to a method, apparatus and system in which a user intends to obtain credit to be applied to a prepaid mobile phone number. Tis example if for illustrative purposes only, and the described techniques are not limited to this example.

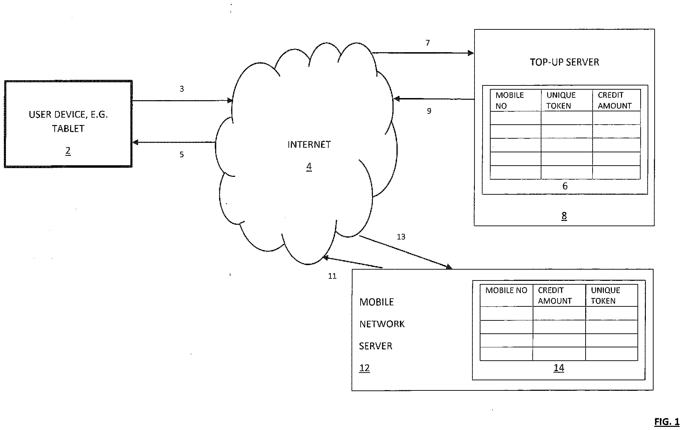

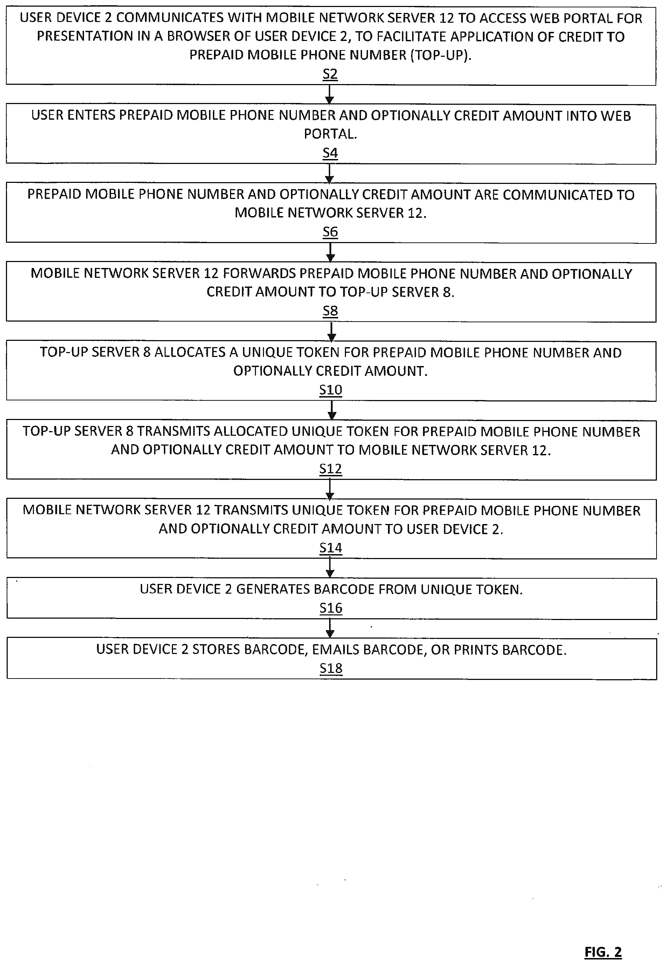

A first part of a preferred example is described with reference to the architecture of FIG. 1 and the process of FIG. 2.

With reference to FIG. 1 there is illustrated an example environment with respect to which the first part of the example is described. This example environment includes a user (or client) device 2, a network 4 such as the Internet or any private restricted network 4, a top-up server 8, and a mobile network (or operator) server 12.

The user is a final consumer who wishes to make a direct recharge of a prepaid mobile number. This is achieved in the example by the user obtaining a barcode from a website and/or an application on a user device 2, which may be a mobile phone handset (so-called mobile App) associated with the prepaid mobile phone number. In general the user may utilise any device to obtain the barcode, for example the user device 2 may be a smartphone, a tablet or a PC. The barcode may be obtained through an App on a mobile, or generally through browsing the web.

With reference to FIG. 1, the user may log on to a web application hosted by the mobile network server 12. A browser of the user device 2 displays a web portal to the user of the user device 2. The user device 2 transmits a request for the web application on communication line 3, which is delivered to the mobile network server 12 on communication line 11 via the network 4. The mobile network server 12 returns the web portal on communication line 13 to the network 4, which is delivered to the user device on communication line 5 and displayed in the browser of the user device 2 to the user.

This process is illustrated by step S2 in FIG. 2.

Using the web portal, the user enters their prepaid mobile phone number, which is the prepaid mobile phone number they wish to top-up and optionally the amount of credit they wish to top up.

This process is illustrated by step S4 in FIG. 2.

The prepaid mobile phone number, and optionally the credit amount, is entered by the user in the web portal, and transmitted to the mobile network server 12, via communication lines 3 and 11. This process is illustrated by step S6.

The mobile network server 12 receives the request from the user device 2, which is a request including the prepaid mobile phone number and optionally the credit amount.

The mobile network server 12 may then store the prepaid mobile phone number and the credit amount in a table 14. The mobile network server 12 transmits the prepaid mobile number to the top-up server 8 on line 13 to line 7 via network 4. This process is illustrated by step S8.

The top-up server 8 allocates to the prepaid mobile phone number a unique token. A mapping between the prepaid mobile phone number and the unique token may be stored by the top-up server 8 in a table 6. The top-up server 8 is shown as having a table 6 comprising a plurality of unique tokens. The top-up server 8 is able to allocate a unique token to a prepaid mobile telephone number on request. Optionally, the unique token is allocated to a combination of the prepaid mobile phone number and the credit amount, where the credit amount is provided. This process is illustrated by step S10.

After the top-up server 8 allocates the prepaid mobile phone number (and optionally the credit amount) received on line 7 to a unique token, the top-up server 8 then transmits to the mobile network server 12 the allocated unique token. This is transmitted on line 9 to line 11, via network 4. This process is illustrated by step S12.

The mobile network server 12 receives the unique token allocated to the prepaid mobile number, and may add it to the appropriate row in its table 14 for the prepaid mobile number and optionally the credit amount. The mobile network server 14 may not store the table 14, and may simply hold the information as necessary, and temporarily store it, to facilitate the operation.

The mobile network server 12 then transmits the allocated unique token on lines 12 and 5 to the user device 2, via the network 4. This process is illustrated by step S14.

The user is then presented with the allocated unique token, displayed in the web browser on the client device 2.

This unique token may then be stored on the client device 2, printed from the client device 2, or transferred to another device of the client, for example by email. The user may also be able to access the allocated unique token on a different client device by logging into an account associated with the web application.

In a preferred example the unique token is translated by the web application at the client device into a barcode as denoted by step S16. The barcode may be displayed in the web portal, saved at the user device 2, printed from the user device, emailed etc. This process is illustrated by step S8.

The barcode may be generated at the user device 2 from the received unique token, or the received unique token may be a barcode. The unique identifier may be the unique token, or a translated version of the unique token.

The user thus has a unique identifier, in this example a bar code derived from a unique token, associated with the unique prepaid mobile number. The unique identifier is an anonymised unique identifier for the prepaid mobile phone number (and optionally the credit to be applied to the unique identifier).

The unique identifier, preferably a barcode, presented to the user will optionally identify the credit amount, where the credit amount was entered and provided to obtain the unique identifier. Then for example when the barcode is displayed on the device, or printed-off, it may have the credit amount displayed/printed with it. Where the credit amount is provided, the unique identifier or barcode may anonymise the prepaid mobile phone number, but the credit amount may be anonymised and just displayed.

The user may advantageously utilise the anonymised unique identifier in order to purchase and/or apply credit to the prepaid mobile phone number in an unsecure, possibly public, environment, in a second part of the method.

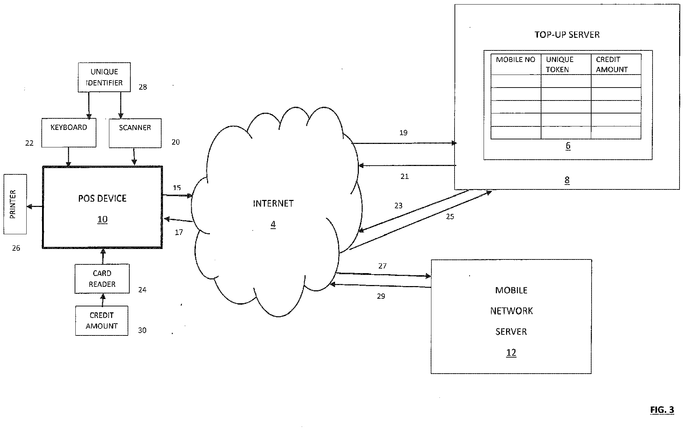

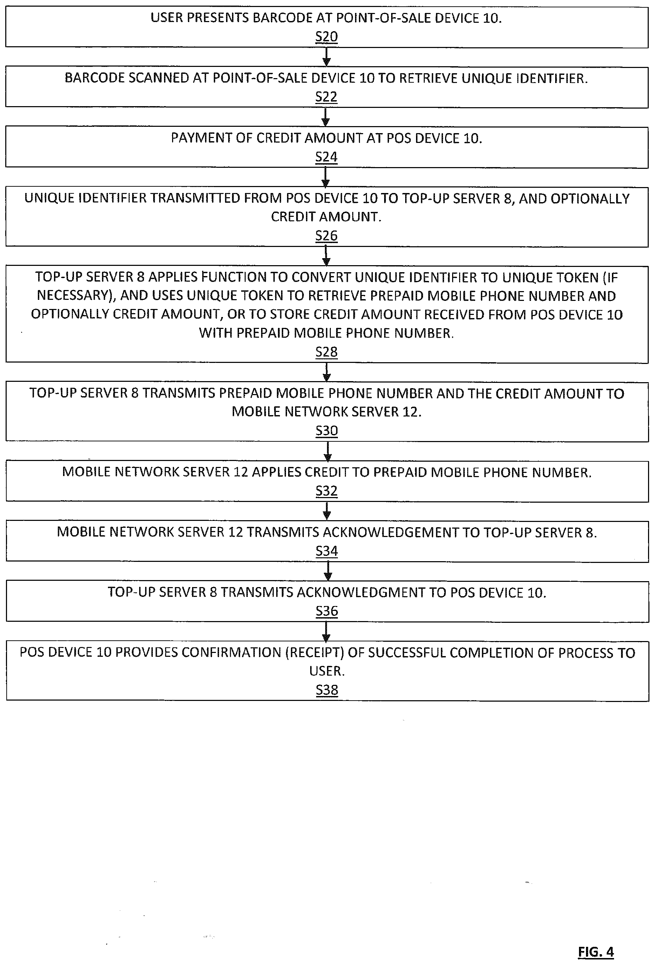

A second part of a preferred example is described with reference to the architecture of FIG. 3 and the process of FIG. 4.

With reference to FIG. 3 there is illustrated an example environment with respect to which the second part of the method is described. This example environment includes a point-of-sale (POS) device 10, the network 4, the top-up server 8, and the mobile network server 12. The POS device 10 is associated with a keyboard 22, a scanner 20, a printer 26, and a card reader 24. A unique identifier 28 may be provided to the keyboard 22 and/or the scanner 20. A credit amount 30 may be provided to the card reader 24.

The user provides the unique identifier, for example the barcode, at the point-of-sale (POS). This may comprise the user verbally presenting a unique identifier to an operator of the POS device 10, or more likely presenting the barcode to the POS operator, who scans the barcode at the POS device. Thus the POS device 10 may be associated with the keyboard 22 or the barcode scanner 20, for manually inputting the unique identifier or scanning the barcode. In general, the unique identifier 28 is provided to the POS device.

Step S20 of FIG. 4 denotes the user presenting the barcode at the POS device 10. Preferably the user either presents the barcode displayed on the screen of the user device 2 for scanning, or presents a print-off of the bar-code for scanning. As denoted by step S22, the barcode is scanned at the POS.

The user may also provide a credit amount 24, for example by cash or card payment, at the POS. Thus the card reader 24 may be provided for inputting the credit amount at the POS device 10. As noted above, the barcode may have displayed with it (either on the screen of the user device or the print-out) the amount of credit to be applied, and the operator of the POS device 10 may take this payment. In an alternative, the user may state the required credit amount to the POS operator, and the POS operator then takes this payment e.g. by a card payment. As denoted by step S24, the payment for the credit amount is preferably made at the POS.

The POS device 10 then transmits the unique identifier obtained from scanning the barcode (or more generally the unique identifier) and optionally the credit amount on communication line 15, which is delivered by the network 4 on communication line 19 to the top-up server 8. This is denoted by step S26.

It can be noted that whether the credit amount is transmitted will be implementation specific. If the first part of the process involved providing the credit amount, then transmission of the unique identifier from the POS device may be dependent on the payment of the credit amount being received. In which case there may be no need to transmit the credit amount. If the use stated and provided the credit amount at the POS device, then it may be required to transmit the identification of the credit amount, in order to apply the credit amount to the prepaid mobile phone number.

The top-up server 8 applies, if necessary, a function to convert the barcode (unique identifier) to the unique token, and then looks-up the unique token in the table 6, to retrieve the prepaid mobile phone number associated with the unique identifier. This is denoted by step S28. The table 6 may then also be adapted to have a further column, to which the credit amount is inserted, if the credit amount is transmitted from the POS device 10 to the top-up server 8. Alternatively the credit amount may already be included in the table 6, having been recorded when the unique token was originally allocated in the first part of the method. Thus the credit amount is either already stored with the prepaid mobile phone number, or provided by the POS device 10. This is denoted by step S30.

The top-up server 8 then transmits the retrieved prepaid mobile phone number and the credit amount on line 23 to the mobile operator server 12 which receives the information on line 27, via the network 4. This is denoted by step S32.

The mobile network server 12 receives the prepaid mobile number and the credit amount and applies the credit amount to the prepaid mobile number.

The mobile network server 12 then returns an acknowledgement message or completion message on line 29 to the top-up server 8 via network 4, which is received on line 21 by the top-up server 8. This is denoted by step S34.

The top-up server 8 then transmits an acknowledgement or completion message on line 21, which is received by the POS device 10 on line 17 via network 4. This is denoted by step S36.

The POS device 10 receives this completion message or acknowledgment message on line 17, and the completion or acknowledgement may be notified to the operator of the POS device 10 by printing a receipt or such like, using the printer 26, or displaying a visual notification to the operator. This is denoted by step S38.

The allocation of the credit amount to the prepaid mobile number is thus complete.

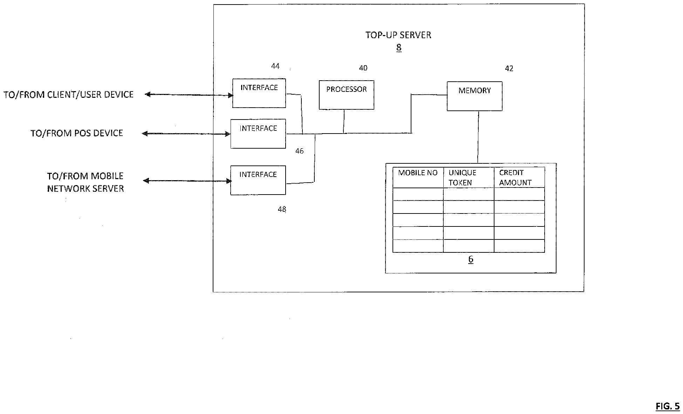

With reference to FIG. 5, there is illustrated an exemplary implementation of the top-up server 8. The top-up server 8 preferably comprises: an interface 44 for communicating with the user (or client) device 2; an interface for communicating with the POS device 10; an interface 48 for communicating with the mobile network server 12; a processor 40 and a memory 42. The interfaces 44,46,48 the processor 40 and the memory 42 are connected by common communication lines. In addition the memory 42 connects to the table 6 (or the table 6 is part of the memory 42). Although FIG. 5 illustrates the top-up server 8, in general this a is a server provided for, or adapted for, offering the functionality as necessary to allocate an anonymous token to a unique identifier, and allow the unique identifier to be retrieved from the anonymous token.

The above technique is described as applying a credit amount to a prepaid mobile phone number. The technique is not limited in its applicability to such an example. In general, a unique identifier is anonymised, by associating a unique token to it. The unique token may then be used without disclosing the unique identifier, but the unique identifier retrieved within a system from presentation of the unique token. An attribute may then be used in combination with the retrieved unique identifier within the system. The unique identifier itself is not disclosed.

In the example there is provided a top-up server 8 and a mobile network server 12. In general the top-up server provides the functionality to anonymise the unique identifier and retrieve the unique identifier from anonymised token. Any server or network entity may provide such a function. In the described example, a prepaid mobile phone number is anonymised, the prepaid mobile phone number recovered from the anonymised data. In general the mobile network server 12 provides the functionality to apply an attribute to the unique identifier. Any server or network entity may provide such a function. In the example a credit amount is applied to a prepaid mobile phone number.

In the example the top-up server (or network entity provided that functionality) and the mobile network server (or network entity providing that functionality) are shown as separate. In alternatives a single network entity may provide both functionalities.

Thus it is not mandatory that a distinct server such as the top-up server is provided to generate the token. In an alternative, the server managing the consumer device (i.e. the mobile operator) may generate the token and manage the process without connection to a separate server, such as the top-up server.

A third party managing the POS device may perform the functionality of the top-up server partially and/or completely.

In the example the top-up server (or network entity providing that functionality) and the mobile network server (or network entity providing that functionality) are shown as communicating via a network. In an alternative they may communicate directly.

In the example the top-up server (or network entity providing that functionality) and the mobile network server (or network entity providing that functionality) are shown as communicating via a network. In an alternative they may communicate via one or more third parties.

In the example the top-up server (or network entity providing that functionality) and the mobile network server (or network entity providing that functionality) are shown as communicating via a network with the user device and/or the POS device. In an alternative they may communicate with the client device and/or the POS device via a third party.

In general the technique is not limited to a direct connection between the user device 2 and the top-up server 8 (FIG. 1) or a direct connection between the POS device 2 and the top-up server 8 (FIG. 3). These connections may be via third party server. For example the user device may communicate with a third party server in order to obtain the barcode, and then the third party server communicate with the top-up server to obtain the unique token identifier for delivery to the user device. Similarly the POS device may communicate with a third party server in order to use the barcode, with the third party server obtaining the prepaid mobile phone number for delivery to the network operator server.

The POS device may be directly connected with the top-up server or indirectly connected with the top-up server if the POS device is connected with any third party.

Servers managed by third parties may be connected with the POS device.

The technique is described as applying credit a prepaid mobile phone number. The technique is not limited to this described example.

For example, the technique may be used for applying a credit (top-up) any account. An example of another scenario is applying a credit to an account such as an Amazon account, without the customer having to give their account number at the point of sale. Thus in this example it may be considered that the prepaid mobile phone number is replaced by an Amazon account number.

It can be noted that the technique may not be limited to a credit amount. In general the technique may be associated with applying an attribute, with a credit amount being an example of an attribute.

In general the technique is not limited to a barcode. A unique token may be allocated, which is translated into an appropriate unique identifier at the user device, a barcode is an example of which.

## Claims

1. A method comprising:
in a first step:
transmitting a unique identifier from a client device to a service provider;
at the service provider, allocating a unique token to the unique identifier; and
receiving the unique token at the client device,
in a second step:
providing the unique token at a point-of-sale device,
transmitting the unique token to the service provider,
at the service provider retrieving the unique identifier from the unique token; and
applying an attribute to the unique identifier.

2. The method of claim 1 wherein the unique identifier is a prepaid mobile phone number and the attribute is a credit amount to be applied to the prepaid mobile phone number.

3. The method of claim 1 or claim 2 wherein in the first step the step of transmitting the unique identifier from the client device to the service provider further comprises transmitting the attribute, wherein on allocating the unique token the unique identifier and the associated attribute are stored, wherein in the second step the step of retrieving the unique identifier further comprises retrieving the attribute.

4. The method of claim 1 or claim 2 wherein in the second step the step of providing the unique token at the point-of-sale device further comprises providing the attribute, wherein the step of transmitting the unique token to the service provider further comprises transmitting the attribute to the service provider.

5. The method of any preceding claim wherein the unique token is translated to a barcode, and the step of providing the unique token comprises scanning the barcode.

6. The method of any preceding claim wherein the second step further comprises receiving at the point-of-sale device an acknowledgment that the attribute has been applied to the unique identifier.

7. A server for facilitating the application of an attribute to a unique identifier, the server comprising:
an interface for receiving the unique identifier from a user;
a processor for associating the unique identifier to a token identifier;
an interface for transmitting the associated token identifier to the user;
an interface for receiving the token identifier from a service entity;
wherein the processor is further configured to retrieve the unique identifier based on the token identifier.

8. The server of claim 7 wherein the interface is configured to receive an attribute in addition to the unique identifier from the user, and associate the token identifier to the unique identifier and the attribute, wherein the attribute is retrieved based on the token identifier as well as to the unique identifier, and the attribute is applied to the unique identifier.

9. The server of claim 7 wherein the interface is configured to receive an attribute from the service entity in addition to the token identifier, and associate the token identifier to the unique identifier and the attribute, and the attribute is applied to the retried unique identifier.

10. A system for the application of an attribute to a unique identifier, the system comprising:
a client device, configured to transmit the unique identifier;
a service provider server configured to allocate a unique token to the unique identifier, and transmit the unique token to the client device;
a point-of-sale device for receiving the unique token, and for transmitting the unique service token to the service provider server,
wherein the service provider server is configured to retrieve the unique identifier associated with the unique token, such that an attribute is applied to the unique identifier.
